# DEMANDE DE BREVET EUROPEEN

(11) **EP 4 715 962 A1**
(43) Date de publication de la demande: **25.03.2026**
(21) Numéro de dépôt: 25202633.1
(22) Date de dépôt: 17.09.2025
(51) Int. Cl.: H01M 10/615, H01M 10/617, H01M 10/625, H01M 10/6571

(54) **COUCHE CHAUFFANTE POUR BATTERIE D'ACCUMULATEURS**

(30) Priorité: 20.09.2024 FR 2410020
(71) Demandeur: AMPERE s.a.s., 92100 Boulougne-Billancourt (FR)
(72) Inventeur: HAMARD, Gabriel, 78280 Guyancourt (FR); PORTELA-GARNIKA, Gonzalo, 78280 Guyancourt (FR); RECOUVREUR, Philippe, 78280 Guyancourt (FR); THOREAU, Maxime, 78280 Guyancourt (FR)
(74) Mandataire: Renault Group

(57) **Abrégé**

L'invention concerne une couche chauffante (60) pour batterie d'accumulateurs, comprenant un support (61) et au moins une piste électrique (62) qui est portée par le support (61) et qui est adaptée à émettre de la chaleur par effet Joule lorsqu'elle est alimentée en courant électrique.

Selon l'invention, la piste électrique présente au moins une première zone (Z1) dans laquelle elle est adaptée à émettre davantage de chaleur que dans une seconde zone (Z2).

## Description

### DOMAINE TECHNIQUE DE L'INVENTION

La présente invention concerne de manière générale les batteries d'accumulateurs.

Elle concerne plus particulièrement une couche chauffante permettant de réchauffer des cellules électrochimiques d'une batterie d'accumulateurs.

Elle concerne également une batterie d'accumulateurs comportant une telle couche chauffante.

Elle concerne aussi un véhicule automobile comportant une telle batterie d'accumulateurs.

L'invention trouve une application particulièrement avantageuse dans les véhicules automobiles à propulsion électrique ou hybride.

### ETAT DE LA TECHNIQUE

Les véhicules automobiles électriques ou hybrides comportent en général un moteur électrique alimenté en courant par une batterie d'accumulateurs, communément appelée batterie de traction. Une telle batterie de traction comprend une pluralité de cellules électrochimiques, par exemple de type Lithium-ion, connectées ensemble pour délivrer une tension élevée.

Ces cellules électrochimiques chauffent lorsqu'elles délivrent ou reçoivent de l'énergie électrique. Pour éviter que leurs températures ne dépassent un seuil au-delà duquel elles pourraient se dégrader, la batterie de traction est généralement équipée d'un circuit de refroidissement au travers duquel circule un fluide.

On sait par ailleurs que la capacité d'une batterie de traction à délivrer ou à emmagasiner de l'énergie électrique dépend fortement de la température des cellules électrochimiques, et donc de la température ambiante. Cette capacité est en particulier dégradée à basse température, ce qui peut s'avérer particulièrement gênant pour les véhicules employés dans les zones géographiques les plus froides, où les températures peuvent atteindre -40°C.

En pratique, à faible température, la dynamique des réactions chimiques entre la cathode et l'anode de chaque cellule électrochimique est ralentie, ce qui impacte directement la capacité de la batterie à fournir ou à emmagasiner de l'énergie.

Lorsqu'il fait froid, il a donc été envisagé d'utiliser le circuit de refroidissement pour y faire circuler un liquide chaud afin d'augmenter la température des cellules électrochimiques. Pour cela, un thermoplongeur électrique a été installé dans le circuit de refroidissement au contact du fluide.

Cependant, dans le cas où le fluide serait de type frigorigène, l'utilisation d'un thermoplongeur serait inadaptée car elle provoquerait un changement de l'état du fluide, depuis l'état liquide à l'état gazeux, ce qui provoquerait une défaillance du système.

A contrario, dans le cas où le fluide serait de l'eau glycolée, le rendement s'avèrerait faible et donc inadapté, dans la mesure où l'inertie thermique de l'eau glycolée est élevée est que le volume d'eau à réchauffer est de plusieurs litres.

Enfin, quand bien même on utiliserait l'une ou l'autre de ces solutions, on constaterait un chauffage non homogène des cellules électrochimiques. Or si l'une des cellules présentent une température inférieure à celle de toutes les autres cellules, elle limite fortement la capacité de l'ensemble de la batterie à fournir ou à emmagasiner de l'énergie.

### PRESENTATION DE L'INVENTION

Afin de remédier aux inconvénients précités de l'état de la technique, la présente invention propose de chauffer autrement les cellules de la batterie de traction.

Plus particulièrement, on propose selon l'invention une couche chauffante de batterie d'accumulateurs comprenant un support et au moins une piste électrique qui est portée par le support et qui est adaptée à émettre de la chaleur par effet Joule lorsqu'elle est alimentée en courant électrique, la piste électrique présentant au moins une première zone dans laquelle elle est adaptée à émettre davantage de chaleur que dans une seconde zone.

Une telle piste électrique présente une inertie thermique très faible, ce qui permet de réchauffer très rapidement les cellules de batterie.

Ce réchauffage se fait en utilisant l'énergie électrique stockée dans les cellules électrochimiques de la batterie, si bien qu'il n'est pas dépendant du fait que la batterie soit en charge ou non.

On observe toutefois que si la piste électrique était homogène, et donc conçu pour émettre de la chaleur avec une puissance homogène par unité de surface sur toute la surface du support, on constaterait un chauffage non homogène des cellules électrochimiques.

Typiquement, lorsque les cellules sont réparties en différents modules, et qu'elles sont empilées les unes sur les autres au sein de chaque module, on constate que les cellules situées aux extrémités des empilements chauffent moins vite que celles situées au centre.

C'est la raison pour laquelle la présente invention propose une piste électrique dont les caractéristiques sont différentes dans les première et seconde zones, de façon à pouvoir chauffer davantage les cellules qui en ont le plus besoin.

D'autres caractéristiques avantageuses et non limitatives de la couche chauffante conforme à l'invention, prises individuellement ou selon toutes les combinaisons techniquement possibles, sont les suivantes :
- la piste électrique est plus fine dans la première zone que dans la seconde zone ;
- la piste électrique couvre le support avec une densité plus grande dans la première zone que dans la seconde zone ;
- la piste électrique est réalisée dans des matières différentes dans la première zone et dans la seconde zone ;
- il est prévu deux premières zones situées de part et d'autre de la seconde zone.

L'invention concerne aussi une batterie d'accumulateurs comportant un boîtier qui loge des cellules électrochimiques et, dans le boîtier, au moins une couche chauffante telle que précité.

D'autres caractéristiques avantageuses et non limitatives de la batterie d'accumulateurs conforme à l'invention, prises individuellement ou selon toutes les combinaisons techniquement possibles, sont les suivantes :
- une partie au moins des cellules électrochimiques sont empilées les unes contre les autres pour former un empilement, et la première zone est située au niveau de l'une au moins des extrémités dudit empilement ;
- il est prévu un transistor et un système de gestion des cellules électrochimiques qui est programmé pour piloter le transistor de manière à moduler la puissance électrique reçue par ladite au moins une piste électrique en largeur d'impulsion ;
- le boîtier loge un circuit de refroidissement des cellules électrochimiques, et ladite au moins une couche chauffante est située entre ledit circuit de refroidissement et une partie au moins desdites cellules électrochimiques.

L'invention concerne enfin un véhicule automobile comportant une machine électrique de traction, et une batterie d'accumulateurs telle que précité, adaptée à alimenter en courant la machine électrique de traction.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :
[Fig. 1] est une vue schématique en perspective éclatée d'une batterie d'accumulateurs conforme à l'invention ;
[Fig. 2] est un schéma électrique de différents composants électriques de la batterie d'accumulateurs de la figure 1 ;
[Fig. 3] est une vue schématique en coupe d'une partie de la batterie d'accumulateurs de la figure 1 ;
[Fig. 4] est une vue schématique de dessus d'une couche chauffante de la batterie d'accumulateurs de la figure 1.

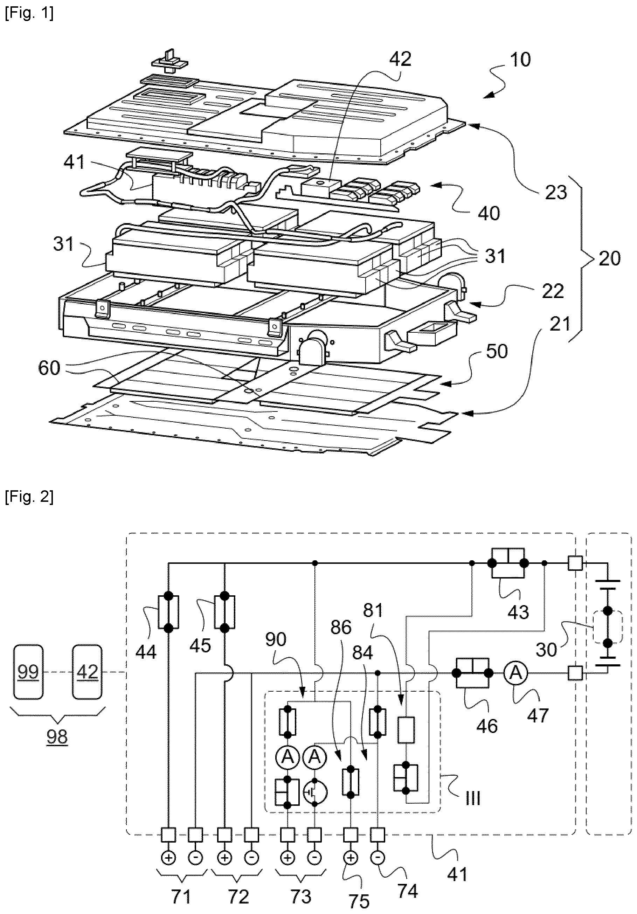

Sur la figure 1, on a représenté une vue éclaté d'une batterie d'accumulateurs, ci-après appelée batterie de traction 10.

Ici, et de façon préférentielle, cette batterie de traction 10 est prévue pour être utilisée au sein d'un véhicule automobile.

Ce véhicule automobile pourrait être de tout type (camion, bus, avion, bateau). Il s'agira de préférence d'une voiture qui comprend classiquement un châssis, des roues dont deux au moins sont motrices, et un groupe motopropulseur adapté à faire tourner les roues motrices.

Le groupe motopropulseur est de préférence purement électrique, mais il pourrait en variante être hybride. Il comporte dans tous les cas au moins une machine électrique (ci-après appelée moteur électrique) alimentée en courant par la batterie de traction 10. On considérera dans la suite qu'il comporte deux moteurs électriques distincts.

Comme le montre la figure 1, la batterie de traction 10 comporte un boîtier 20 qui loge l'ensemble des autres composants référencés sur cette figure.

Ce boîtier 20 est ici formé en plusieurs parties. Il comporte dans l'exemple illustré une plaque de base 21, un cadre 22 et un couvercle 23, fixés les uns aux autres.

Le cadre 22 comporte quatre parois latérales sensiblement planes. Il présente deux tranches adaptées à venir s'appliquer respectivement contre la plaque de base 21 et le couvercle 23, de sorte que le boîtier 20 présente globalement une forme parallélépipédique.

Ce boîtier 20 est conçu pour être fermé de façon hermétique.

Dans la suite de la description, le terme « inférieur » sera utilisé pour désigner un côté ou un objet tourné du côté de la plaque de base 21, tandis que le terme « supérieur » sera utilisé pour désigner un côté ou un objet tourné du côté du couvercle 23.

La batterie de traction 10 comporte par ailleurs une pluralité de cellules électrochimiques 32ᵢ.

Il pourrait typiquement s'agir de cellules de type lithium-ion, mais d'autres variantes seraient envisageables.

Chaque cellule électrochimique 32ᵢ présente ici une tension à ses bornes de l'ordre de 3 à 5 V. Ces cellules sont alors connectées en série pour atteindre le niveau de tension requis par l'application.

Ici, ces cellules sont au nombre d'une centaine, pour que chaque moteur électrique puisse développer un couple et une puissance suffisants pour propulser le véhicule pendant une durée souhaitée. Ainsi, la tension aux bornes extérieures de la batterie de traction 10 est d'environ 400V. En pratique, il est ici prévu 96 cellules. Bien entendu, le nombre de cellules pourraient être plus grand (environ 200 par exemple) ou plus faible.

Sur la figure 1, ces cellules électrochimiques 32ᵢ ne sont pas visibles. On observe en revanche qu'elles sont réparties en plusieurs ensembles de cellules appelés « modules 31 ». Il est ici prévu huit modules 31 de douze cellules électrochimiques 32ᵢ, qui sont connectés électriquement les uns aux autres, en série, de façon à former un pack 30 de modules 31.

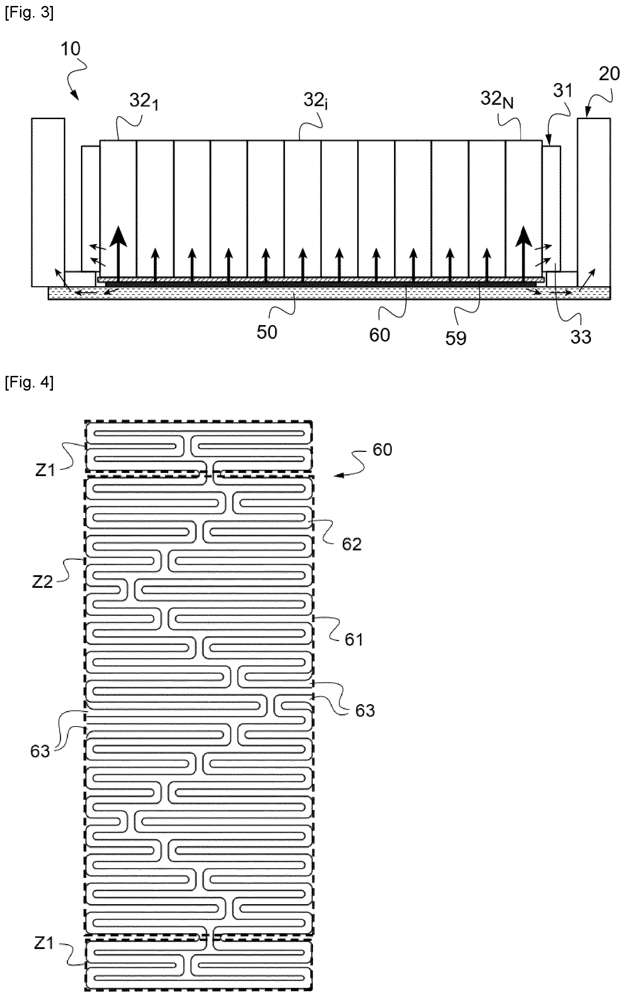

Comme le montre la figure 3, chaque module 31 comporte un encadrement 33 qui permet de maintenir les cellules les unes contre les autres. Cet encadrement 33 est ici ouvert en face inférieure. Il est de préférence aussi ouvert en face supérieure. Il comporte donc quatre parois latérales qui entourent les douze cellules électrochimiques 32ᵢ.

Chaque cellule électrochimique 32ᵢ présente une forme parallélépipédique de faible épaisseur, avec un fond tourné vers la plaque de base 21, un sommet opposé duquel émergent ses deux bornes de connexion, deux côtés et deux faces principales.

Au sein de chaque module 31, les douze cellules électrochimiques 32ᵢ sont empilées les unes contre les autres, face principale contre face principale. Elles forment donc un empilement ici de douze cellules électrochimiques 32ᵢ (i étant un indice allant de 1 à N, avec N ici égal à douze). Dans la suite on distinguera les première et dernière cellules électrochimiques 32₁, 32_{N} de l'empilement des autres cellules électrochimiques. Elles seront ci-après appelées cellules électrochimiques d'extrémité 32₁, 32_{N}.

Comme le montre la figure 1, les modules 31 sont ici répartis côte-à-côte, sur deux lignes distinctes.

La batterie de traction 10 comporte un circuit électrique 40, dont une partie est portée par une platine 41 qui est ici fixée sous le couvercle 23, au-dessus des modules 31 de cellules électrochimiques 32i.

Ce circuit électrique 40 est en partie représenté sur la figure 2.

Il comprend notamment un système de gestion 42 de batterie, plus connu sous l'acronyme BMS (de l'anglais « battery managment system »).

Ce système de gestion 42 comporte un processeur (CPU), une mémoire et différentes interfaces d'entrée et de sortie. Il remplit classiquement plusieurs fonctions, dont celles consistant à :
- surveiller en continu les tensions individuelles de chaque cellule électrochimique 32i et les courants de charge et de décharge, afin de s'assurer que tous ces paramètres restent dans des plages de fonctionnement sûres, et
- équilibrer les tensions entre les cellules électrochimiques 32i.

Ici, comme cela sera décrit ci-après, il assure en outre la gestion thermique des cellules électrochimiques 32i, pour éviter qu'elles ne chauffent trop ou pour leur permettre de monter rapidement en température lorsqu'elles sont initialement trop froides.

La batterie d'accumulateurs 20 comporte à cet effet des capteurs de température permettant de déterminer des valeurs de température dans différentes zones du boîtier 20.

Il pourrait s'agir de capteurs physiques, c'est-à-dire de capteurs positionnés dans des zones précises du boîtier 20 pour mesurer les valeurs de température souhaitées.

En variante, il pourrait s'agit de capteurs logiciels, c'est-à-dire d'algorithmes programmés ou entraînés pour calculer des valeurs de température dans des zones précises du boîtier 20, sur la base d'autres paramètres (typiquement en fonction de températures mesurées ailleurs dans le boîtier ou à l'extérieur, de la tension des cellules électrochimiques 32i, de l'intensité que ces cellules délivrent...).

En pratique, ici, il sera prévu un unique capteur de température dans chaque module 31, placé au-dessus de l'une des cellules électrochimiques 32i, et le système de gestion 42 sera programmé pour calculer plusieurs valeurs de température dans chaque module 31.

Grâce à son interface, le système de gestion 42 peut recevoir d'un calculateur 99 externe au boîtier 20 des instructions de plus haut niveau.

Ce système de gestion 42 et ce calculateur 99 sont ainsi programmés pour fonctionner de façon conjointe. Ci-après, le terme « unité de calcul 98 » sera alors utilisé pour désigner l'un et/ou l'autre de ces deux composants.

Lorsqu'elles délivrent ou reçoivent du courant, les cellules électrochimiques 32ᵢ s'échauffent. Pour éviter que leurs températures dépassent un seuil au-delà duquel elles risqueraient de se dégrader rapidement, il est prévu un circuit de refroidissement 50. Ce circuit de refroidissement 50 comporte ici une plaque épaisse à l'intérieur de laquelle serpente un conduit de circulation d'un liquide de refroidissement.

Ce circuit de refroidissement 50 a donc une fonction d'échangeur de chaleur.

Il est ici situé du côté inférieur des modules 31, contre la plaque de base 21 du boîtier 20.

Le conduit du circuit de refroidissement 50 présente à ses extrémités des embouts qui débouchent hors du boîtier 20, par lesquels il est adapté à être connecté à des durites d'entrée et de sortie de liquide de refroidissement. Un compresseur extérieur au boîtier 20 est alors prévue pour forcer la circulation du liquide de refroidissement dans le circuit. En variante, si le fluide de refroidissement employé était non pas un fluide frigorigène mais de l'eau glycolée, on utiliserait une pompe en lieu et place de ce compresseur.

Dans le cadre de l'invention, la batterie de traction 10 comporte au moins une couche chauffante 60.

La ou les couche(s) chauffante(s) 60 s'interpose(nt) ici entre le circuit de refroidissement 50 et les modules 31.

La puissance maximum émise par l'ensemble de ladite au moins une couche chauffante 60 est supérieure ou égale à 1000 Watts. Elle est ici égale à 3500 Watts.

Chaque couche chauffante 60 est de préférence située au plus près des modules 31. Comme le montre la figure 3, seule une interface thermique 59 facilitant les échanges de chaleur est prévue entre les cellules électrochimiques 32i et chaque couche chauffante 60. Ici, cette interface thermique 59 se présente sous la forme d'une pâte thermique.

Comme le montre la figure 4, chaque couche chauffante 60 se présente sous la forme d'une nappe, et comporte alors un support 61 et au moins une piste électrique 62 portée par le support 61.

Le support 61 est réalisé dans un matériau isolant électriquement.

Ce support 61 est de préférence souple. Il est par exemple formé de deux films en matière plastique (typiquement en polyéthylène téréphtalate) superposés, qui prennent la piste électrique 62 en sandwich. Ces deux films présentent des épaisseurs très faibles, ici de l'ordre du quart de millimètre.

Chaque piste électrique 62 est au contraire réalisée dans un matériau conducteur électriquement. Par "piste électrique", on entend une voie conductrice utilisée pour acheminer le courant électrique. Une telle piste est donc dépourvue de tout composant électronique.

Chaque piste électrique 62 serpente entre ces deux films de façon à couvrir au moins 50% de la surface du support 61. Elle présente deux extrémités auxquelles il est possible d'appliquer une tension électrique de façon à ce que la piste électrique s'échauffe par effet Joule.

Ici, comme le montre la figure 1, les modules 31 étant répartis en deux ensembles situés à distance l'un de l'autre, il est prévu deux couches chauffantes 60 distinctes, qui sont connectées ensemble (de préférence en série).

Chaque couche chauffante 60 s'étend donc sous quatre modules 31.

En variante, on pourrait prévoir une unique couche chauffante, ou au contraire une couche chauffante sous chaque modu-+le.

On pourra prévoir que chaque couche chauffante 60 ne comporte qu'une seule et unique piste électrique qui serpente sous plusieurs modules, typiquement sous les quatre modules de l'ensemble correspondant.

En variante, on pourra prévoir que chaque couche chauffante 60 comporte plusieurs pistes électriques distinctes connectées les unes aux autres (de préférence en série).

Quoi qu'il en soit, la ou les pistes électriques sont réparties de façon à pouvoir réchauffer les différentes cellules électrochimiques 32ᵢ des modules 31 du pack 30.

Sur la figure 4, on a représenté une partie de l'une des couches chauffantes 60 qui s'étend sous l'un des modules 31. Cette partie présente donc une longueur et une largeur égales à celles de ce module 61.

Dans la suite de la description, les expressions « partie de piste électrique 62 » et « partie de support 61 » désigneront donc les parties de la piste électrique 62 et du support 61 qui s'étendent sous le module 31 précité.

Alors, cette partie de piste électrique 62 serpente de façon à couvrir au moins 50% de la surface de cette partie de support 61. Elle pourrait serpenter de diverses manières sur celle-ci. En pratique, ici elle forme des allers-retours sur la largeur de la partie de support 61, qui s'étendent sur toute la longueur de cette partie de support 61.

Ici, la partie de piste électrique 62 présente quatre extrémités 63, permettant sa connexion entre deux autres parties de la piste électrique 62 de la couche chauffante 60.

Selon une caractéristique essentielle de l'invention, la partie de piste électrique 62 présente au moins une première zone Z1 dans laquelle elle est adaptée à émettre davantage de chaleur que dans une seconde zone Z2. L'objectif est que la puissance thermique par unité de surface (par ex. par mm²) émise par la partie de piste électrique 62 ne soit pas identique d'une zone à l'autre, et qu'elle présente une valeur non nulle dans ces zones, lorsqu'elle est alimentée avec une puissance électrique sensiblement constante.

En pratique, selon la configuration des cellules électrochimiques 32ᵢ dans le boîtier 20, certaines vont être naturellement davantage refroidies que d'autres.

Dans l'exemple représenté sur la figure 3, la chaleur s'évacue naturellement davantage hors des cellules électrochimiques d'extrémité 32₁, 32_{N} qui sont au contact de l'encadrement 33 (par conduction) que des autres cellules électrochimiques 32₂-32_{N-1} puisque ces dernières sont prises en sandwich entre deux cellules électroniques chaudes.

Ainsi, lorsque la partie de piste électrique 62 est alimentée en courant, il s'avère nécessaire d'apporter davantage de chaleur aux cellules électrochimiques d'extrémité 32₁, 32_{N} qu'aux autres cellules électrochimiques 32₂-32_{N-1} pour que les températures de toutes ces cellules restent homogènes.

Dès lors, dans l'exemple illustré, la partie de piste électrique 62 présente deux premières zones Z1 situées sous les cellules électrochimiques d'extrémité 32₁, 32_{N}, dans lesquelles elle est adaptée à émettre davantage de chaleur que dans une seconde zone Z2 centrale, située entre les deux premières zones Z1, sous les autres cellules électrochimiques 32₂-32_{N-1}.

Ici, il est prévu deux types de zone Z1, Z2 au sein de chacune desquelles la puissance thermique émise par unité de surface est homogène mais entre lesquelles les valeurs de puissance thermique par unité de surface diffèrent.

Bien entendu, en variante, on pourrait prévoir davantage de types de zones. Typiquement, on pourrait prévoir entre les zones Z1 et Z2 des zones intermédiaires au niveau desquelles la partie de piste électrique 62 émettrait une chaleur intermédiaire.

Pour être en mesure d'émettre une puissance thermique par unité de surface variable d'une zone à l'autre, la partie de piste électrique 62 présente des caractéristiques géométriques ou des propriétés intrinsèques différentes d'une zone à l'autre.

Elle peut ainsi présenter une résistance ou une conductibilité thermique qui varie d'une zone à l'autre.

Ici, trois principaux modes de réalisation sont envisagés pour faire varier la puissance thermique par unité de surface émise par la partie de piste électrique 62 d'une zone à l'autre lorsque cette partie de piste est parcourue par un courant électrique d'intensité égale sur toute sa longueur.

Le premier mode consiste à affiner la partie de piste électrique 62 davantage dans la première zone que dans la seconde zone.

Ainsi, on peut prévoir que la partie de piste présente une largeur et/ou une hauteur plus faible dans chaque première zone Z1.

Le second mode de réalisation consiste à densifier la partie de piste électrique davantage dans chaque première zone Z1 que dans la seconde zone Z2.

C'est le mode de réalisation illustré sur la figure 4. Dans ce mode, l'écart entre deux tronçons parallèles de la partie de piste électrique est ainsi plus faible dans chaque première zone Z1 que dans la seconde zone Z2. L'objectif est donc de faire en sorte que la densité de surface du support occupée par la partie de piste électrique soit plus grande dans chaque première zone Z1 que dans la seconde zone Z2.

Le troisième mode de réalisation consiste à utiliser des matériaux différents pour fabriquer la partie de piste électrique dans les différentes zones. A titre d'exemple, la partie de piste électrique 62 pourrait être fabriquée en cuivre (dont la résistivité à 20°C est de 17.10⁻⁹ Ωm) dans la seconde zone Z2 et en aluminium (dont la résistivité à 20°C est de 28.10⁻⁹ Ωm) dans chaque première zone Z1.

Bien entendu, ces trois modes de réalisation ne sont pas exclusifs les uns des autres. Ainsi, les premier et second modes de réalisation, ou les premier et troisième modes de réalisation, ou les second et troisième modes de réalisation, pourraient être utilisés de façon conjointe. Il serait aussi possible d'utiliser ces trois modes de réalisation de façon combinée.

La piste électrique 62 est prévue pour être alimentée en courant électrique par les cellules électrochimiques 32i elles-mêmes, sous la commande de l'unité de calcul 98.

Cette commande est ici réalisée à l'aide d'un transistor 80, en modulation de largeur d'impulsion.

La modulation par largeur d'impulsion (MLI), aussi connue sous le nom de PWM (de l'anglais « Pulse Width Modulation »), est une technique de modulation utilisée pour faire varier une puissance électrique sans perte par effet Joule. Elle est généralement réalisée à une fréquence constante, ici de l'ordre d'un Hertz.

Le signal généré par le transistor 80 et transmis à la piste électrique 62 est alors caractérisé par une série d'impulsions à fréquence constante. La largeur de chaque impulsion varie en fonction de la puissance électrique que l'on souhaite transmettre à la piste électrique.

Le rapport cyclique (en anglais « duty cycle ») est la proportion du temps pendant lequel l'impulsion est active (à l'état haut) par rapport à la période totale du signal.

Le transistor 80 utilisé est de type MOSFET. On rappellera ici que les transistors sont des dispositifs semi-conducteurs qui utilisent des matériaux comme le silicium pour contrôler le flux de courant. Dépourvus de pièces mobiles, ils ont une durée de vie très supérieure à celle d'un relais et un temps de réponse beaucoup plus faible.

Sur la figure 2, on a représenté de façon schématique le circuit électrique 40 permettant de connecter les cellules électrochimiques 32ᵢ du pack 30 de modules 31 à différentes bornes.

Parmi ces bornes, il est prévu au moins une paire de bornes extérieures qui émergent du boîtier 20. Il est ici prévu deux paires de bornes extérieures 71, 72 auxquelles les deux moteurs électriques peuvent être connectés.

Chaque paire de borne extérieure présente, comme le pack 30, une borne positive et une borne négative.

La borne positive de chaque paire de bornes extérieures 71, 72 est connectée à la borne positive du pack 30 via un interrupteur commandé 43 (ou « relais ») et via un fusible de protection 44, 45 adapté à ouvrir le circuit dès que l'intensité du courant dépasse un seuil de sécurité. Ici, il est prévu un unique interrupteur commandé 43 connecté entre la borne positive du pack 30 et les deux bornes positives, et un fusible de protection 44, 45 spécifique à chacune de ces bornes positives.

La borne négative de chaque paire de bornes extérieures 71, 72 est connectée à la borne négative du pack 30 via un interrupteur commandé 46 (ici un unique relais) et via un capteur de courant 47.

Le circuit électrique 40 comporte également d'autres sous-circuits.

Il comporte ainsi un sous-circuit 81 qui est branché aux bornes de l'interrupteur commandé 43 et qui comporte un relais et une résistance connectés en série. Ce sous-circuit 81 permet de réduire le pic d'intensité qu'on observe lors du réveil du véhicule. En effet, si on fermait simultanément les deux interrupteurs commandés 43, 46, l'intensité du courant demandé pour charger tous les condensateurs du véhicule serait très élevée et potentiellement destructrice. Ce sous-circuit 81, grâce à sa résistance, permet de lisser le pic de courant demandé avant de refermer l'interrupteur commandé 43.

Le circuit électrique 40 comporte également un sous-circuit 84 qui est branché à la sortie de l'interrupteur commandé 46 (c'est-à-dire à l'opposé du pack 30 par rapport à cet interrupteur) et qui comporte un fusible et une borne par laquelle il est adapté à être connecté à un régulateur de tension DC-DC. Typiquement, ce régulateur peut être utilisé pour alimenter le réseau de bord du véhicule grâce au pack 30.

Le circuit électrique 40 comporte aussi un sous-circuit 86 qui est branché à la sortie de l'interrupteur commandé 43 et qui comporte un fusible et une borne par laquelle il est adapté à être connecté à un chargeur de courant tel qu'une station de charge extérieure au véhicule.

Dans le cadre de l'invention, le circuit électrique 40 comporte un sous-circuit 90 spécialement conçu pour permettre aux cellules électrochimiques 32ᵢ du pack 30 d'alimenter chaque piste électrique 62 de chaque couche chauffante 60 en courant électrique.

Ce sous-circuit 90 comporte une paire de bornes 73 connectées à chaque piste électrique 62.

L'une de ces bornes est connectée à la sortie de l'interrupteur commandé 43, via un fusible, un interrupteur commandé de type relais, et un capteur de courant.

L'autre est connectée à la sortie de l'interrupteur commandé 46, via un fusible (ici celui du sous-circuit 84), un capteur de courant et le transistor précité.

On pourrait prévoir que ce sous-circuit 90 ne comporte qu'un capteur de courant, mais on préférera en utiliser deux distincts par soucis de sécurité en cas de défaillance de l'une d'entre eux. On pourrait également se passer de l'interrupteur commandé, mais on préfèrera toutefois en utiliser un en cas de défaillance du transistor 80.

La présente invention n'est nullement limitée aux modes de réalisation décrits et représentés, mais l'homme du métier saura y apporter toute variante conforme à l'invention.

Ainsi, les zones dans lesquelles la couche chauffante émet le plus de chaleur pourront être réparties de façon très différente de celle illustrée sur la figure 4, compte tenu de la façon selon laquelle les cellules électrochimiques seront logées dans le boîtier.

A titre d'exemple, on pourrait prévoir que les cellules d'un même module soient situées à des distances variables les unes des autres, une couche comprimable étant par exemple interposée entre les deux cellules situées le plus au centre du module. Dans cette éventualité, la piste pourra être prévue pour chauffer davantage ces deux cellules, afin de tenir compte des pertes thermiques qu'elles subiront du fait de la présence de cette couche comprimable.

Encore à titre d'exemple, on pourrait prévoir que des cellules n'aient pas tous la même surface de contact avec la couche chauffante. Dans cette éventualité, la piste électrique pourrait être conçue pour apporter davantage de chaleur à la cellule dont la surface de contact est la plus petite.

## Revendications

1. Couche chauffante (60) de batterie d'accumulateurs (10) comprenant
un support (61) et au moins une piste électrique (62) qui est portée par le support (61) et qui est adaptée à émettre de la chaleur par effet Joule lorsqu'elle est alimentée en courant électrique,
la piste électrique (62) présentant au moins une première zone (Z1) dans laquelle elle est adaptée à émettre davantage de chaleur que dans une seconde zone (Z2).

2. Couche chauffante (60) selon la revendication 1, dans laquelle la piste électrique (62) est plus fine dans la première zone (Z1) que dans la seconde zone (Z2).

3. Couche chauffante (60) selon la revendication 1 ou 2, dans laquelle la piste électrique (62) couvre le support (61) avec une densité plus grande dans la première zone (Z1) que dans la seconde zone (Z2).

4. Couche chauffante (60) selon l'une des revendications 1 à 3, dans laquelle la piste électrique (62) est réalisée dans des matières différentes dans la première zone (Z1) et dans la seconde zone (Z2).

5. Couche chauffante (60) selon l'une des revendications 1 à 4, dans laquelle il est prévu deux premières zones (Z1) situées de part et d'autre de la seconde zone (Z2).

6. Batterie d'accumulateurs (10) comportant un boîtier (20) qui loge des cellules électrochimiques (32ᵢ), **caractérisée en ce qu'**elle comporte dans le boîtier (20) au moins une couche chauffante (60) conforme à l'une des revendications 1 à 5.

7. Batterie d'accumulateurs (10) selon la revendication 6, dans laquelle une partie au moins des cellules électrochimiques (32ᵢ) sont empilées les unes contre les autres pour former un empilement, et dans lequel la première zone (Z1) est située au niveau de l'une au moins des extrémités dudit empilement.

8. Batterie d'accumulateurs (10) selon la revendication 6 ou 7, dans laquelle il est prévu un transistor (80) et un système de gestion (42) des cellules électrochimiques (32ᵢ) qui est programmé pour piloter le transistor (80) de manière à moduler la puissance électrique reçue par ladite au moins une piste électrique (62) en largeur d'impulsion.

9. Batterie d'accumulateurs (10) selon l'une des revendications 6 à 8, dans laquelle le boîtier (20) loge un circuit de refroidissement (50) des cellules électrochimiques (32ᵢ), et dans lequel ladite au moins une couche chauffante (60) est située entre ledit circuit de refroidissement (50) et une partie au moins desdites cellules électrochimiques (32ᵢ).

10. Véhicule automobile comportant une machine électrique de traction, **caractérisé en ce qu'**il comporte une batterie d'accumulateurs (10) conforme à l'une des revendications 6 à 9, adaptée à alimenter en courant la machine électrique de traction.
